# EUROPEAN PATENT APPLICATION

(11) **EP 4 120 289 A1**
(43) Date of publication of application: **18.01.2023**
(21) Application number: 21184994.8
(22) Date of filing: 12.07.2021
(51) Int. Cl.: G21K 1/00, G06N 10/00, B82Y 10/00

(54) **DEVICE FOR CONTROLLING TRAPPED IONS HAVING A FUNCTIONAL SPACER AND METHOD OF MANUFACTURING THE SAME**

(71) Applicant: Infineon Technologies Austria AG, 9500 Villach (AT)
(72) Inventor: ROESSLER, Clemens, 9500 Villach (AT); AUCHTER, Silke, 9500 Villach (AT); ROESSLER, Johanna Elisabeth, 9500 Villach (AT)
(74) Representative: Lambsdorff & Lange Patentanwälte Partnerschaft mbB

(57) **Abstract**

A device (100) for controlling trapped ions (180) includes a first substrate (120) comprising a semiconductor and/or dielectric material. A first metal structure (125) is disposed at a main side of the first substrate. The device further comprises a second substrate (140) comprising a semiconductor and/or dielectric material. A second metal structure (145) is disposed at a main side of the second substrate opposite the main side of the first substrate. A spacer (360) is disposed between and bonded to the first substrate and the second substrate. The spacer comprises an electrical interconnect (365) which electrically connects the first metal structure to the second metal structure. A bond between the spacer and the first substrate or the spacer and the second substrate is a bond formed by waferbonding. At least one ion trap is configured to trap ions in a space between the first substrate and the second substrate, the first metal structure and the second metal structure comprising electrodes of the ion trap.

## Description

### Technical Field

This disclosure relates generally to the field of trapped ions, and in particular to devices for controlling trapped ions for quantum computing and methods of manufacturing such devices.

### Background

Trapped ions are one of the most promising candidates for use as qubits (quantum bits) in quantum computers since they can be trapped with long lifetimes in a scalable array by virtue of electromagnetic fields. Presently, the most advanced ion traps can control about 50 qubits individually and can maintain up to 16 qubits in a fully entangled state. Future quantum computers will need to increase the number of controllable qubits to more than 100 or even 1000 to outperform classical supercomputers. Further, the number of ions used for each qubit will in future be raised to about 6 to 100 ions in order to allow for more efficient error-correction during quantum computing.

With increasing the number of ions, the area requirement for devices for controlling trapped ions such as, e.g., quantum computing devices increases. Assuming a mean distance between neighboring ions of 10 to 100 µm and a number of 10000 ions, the total required area may be as large as 100 cm² to 1 m². Hence, increasing the number of simultaneously trapped ions while maintaining the ability to control and measure them individually is one of the main challenges in controlling trapped ions and, in particular, in progressing to practical quantum computing.

A problem which arises when scaling-up the number of ions is to provide for a high number of trap electrodes (e.g. more than 10.000) raising the complexity of the electrical interconnect between the electrodes and the terminals of the device. Further, the larger the device the more sophisticated concepts are needed for selectively coupling and decoupling laser light to the ions and for protecting the device against external and internal interferences. Since the electrodes of the traps have manufacturing tolerances in the micrometer range while the device as such has macroscopic dimensions, high mechanical stability and robustness of the devices is a major issue for scaling-up to large number of ions.

### Summary

According to an aspect of the disclosure, a device for controlling trapped ions includes a first substrate comprising a semiconductor and/or dielectric material. A first metal structure is disposed at a main side of the first substrate. The device further includes a second substrate comprising a semiconductor and/or dielectric material. A second metal structure is disposed at a main side of the second substrate opposite the main side of the first substrate. A spacer is disposed between and bonded to the first substrate and the second substrate, the spacer comprising an electrical interconnect which electrically connects the first metal structure to the second metal structure, wherein a bond between the spacer and the first substrate or the spacer and the second substrate is a bond formed by waferbonding. At least one ion trap is configured to trap ions in a space between the first substrate and the second substrate, the first metal structure and the second metal structure comprising electrodes of the ion trap.

According to another aspect of the disclosure, a method of manufacturing a device for controlling trapped ions comprises providing a first wafer comprising a semiconductor and/or dielectric material and forming a pattern of first metal structures at a main side of the first wafer. A second wafer comprising a semiconductor and/or dielectric material is provided and a pattern of second metal structures is formed at a main side of the second wafer. A spacer wafer comprising a dielectric material is provided. A pattern of electrical interconnects is formed in the spacer wafer, wherein an electrical interconnect is configured to electrically connect first metal structures to second metal structures. The spacer wafer is structured to form a structured spacer wafer including a pattern of spacer members, wherein at least some of the spacer members comprise an electrical interconnect. The structured spacer wafer is bonded to the first wafer and/or to the second wafer by waferbonding, thereby forming bonds between the electrical interconnect and the first wafer and/or the second wafer. Devices for controlling trapped ions are singulated from the bonded-together first wafer and spacer wafer or the bonded-together second wafer and spacer wafer.

### Brief description of the drawings

The elements of the drawings are not necessarily to scale relative to each other. Like reference numerals designate corresponding similar parts. The features of the various illustrated embodiments can be combined unless they exclude each other and/or can be selectively omitted if not described to be necessarily required. Embodiments are depicted in the drawings and are exemplarily detailed in the description which follows.
Figure 1 is a schematic cross-sectional view of an exemplary device for controlling trapped ions.
Figure 2 is a schematic cross-sectional view of the device of Figure 1 illustrating lateral optical access by laser light into the device.
Figure 3 is a schematic cross-sectional view of the device of Figures 1 and 2 further illustrating spacer members including an electrical interconnect.
Figure 4A is a schematic top view on an exemplary spacer member including an electrical interconnect.
Figure 4B is a schematic cross-sectional view of the spacer member of Figure 4A along sectional line A-A.
Figure 5 is a schematic partial sectional view view of an exemplary spacer member including an optical duct.
Figure 6 is a schematic cross-sectional view of an exemplary device for controlling trapped ions illustrating an exemplary spacer member comprising an optical duct and illustrating an exemplary spacer member configured as an inner partition wall of the device.
Figure 7 is a schematic side view of a glass spacer illustrating stages of a process of manufacturing horizontal optical ducts and/or vertical through connections and/or optical blockers passing through a glass spacer.
Figure 8 is a flowchart illustrating stages of a method of manufacturing devices for controlling trapped ions.
Figure 9A is a top view on an exemplary first wafer (bottom wafer) on which a pattern of first metal structures is formed.
Figure 9B is a top view on an exemplary structured spacer wafer including a pattern of spacer members.
Figure 9C is a top view on an exemplary second wafer (top wafer) on which a pattern of second metal structures is formed.
Figure 10A is a perspective view of an exemplary device for controlling trapped ions after device singulation.
Figure 10B is a top view on an exemplary spacer equipped with optical blockers after device singulation.

### Detailed description

The words "over" or "beneath" with regard to a part, element or material layer formed or located or disposed or arranged or placed "over" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "beneath" used with regard to a part, element or material layer formed or located or disposed or arranged or placed "over" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

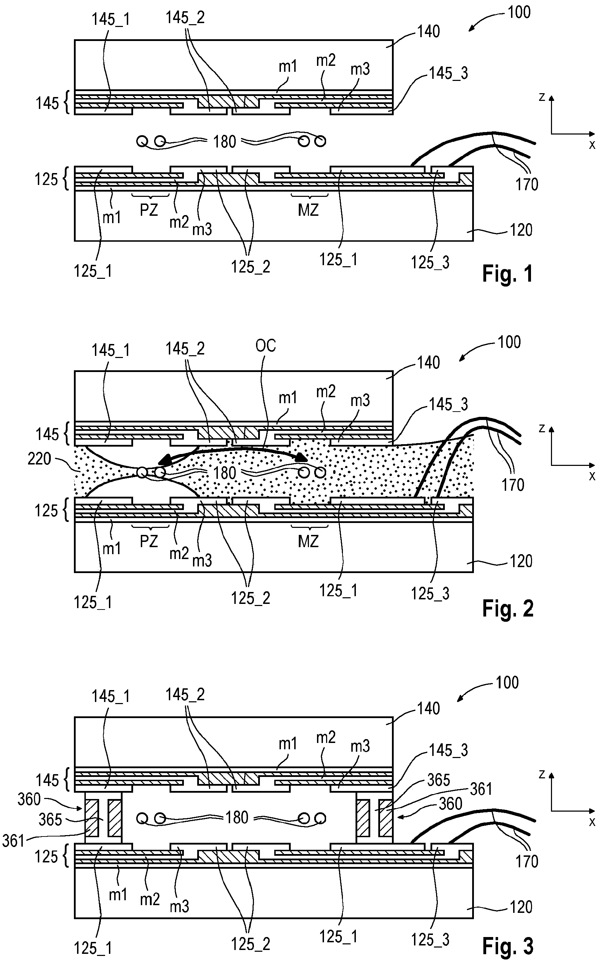

Referring to Figure 1 a device 100 for controlling trapped ions may include a first substrate 120 and a second substrate 140. The second substrate 140 is disposed over the first substrate 120 in Z-direction. The Z-direction may represent the height dimension of the device 100.

The second substrate 140 is spaced apart in Z-direction from the first substrate 120 so as to define a space between the first substrate 120 and the second substrate 140.

The first and the second substrates 120, 140 may be substantially planar (except for surface structures created e.g. by electrodes, oxide or passivation) and may be oriented parallel to each other. In Figure 1, parallelism of the first and second substrates 120, 140 is exemplarily depicted in the X-direction and may, e.g., also apply to the Y-direction (not shown). The X-direction and the Y-direction are perpendicular to each other and define a plane in the width and length directions of the device 100 which is normal to the Z-direction.

The first substrate 120 and/or the second substrate 140 may, e.g., comprise or be of a semiconductor material, e.g. silicon or silicon carbide or silicon-on-insulator (SOI). The first substrate 120 and/or the second substrate 140 may, e.g., be a micro-structured semiconductor chip. In other examples, the first substrate 120 and/or the second substrate 140 may comprise or be of a dielectric material such as, e.g., fused silica or sapphire.

The distance between the first substrate 120 and the second substrate 140 may be in a range between, e.g., 50 µm to 1000 pm, in particular 100 µm to 400 µm, or 200 µm to 300 µm. The first substrate 120 and the second substrate 140 may, e.g., have each a thickness in a range between, e.g., 250 µm to 1500 µm, in particular 300 µm to 1000 µm, more in particular 400 µm to 750 µm or 500 µm to 600 µm.

As will be described further below in more detail, the space defined between the first substrate 120 and the second substrate 140 includes one or a plurality of ion traps configured to trap one or a plurality of ions 180 in the space. The location of the ions 180 can be controlled by the one or more ion traps, e.g. the ions 180 can be moved in the space in one or more lateral directions (e.g. in the X-direction or in any direction lying in a plane which is normal to the Z-direction).

The first substrate 120 is provided with a first electrode structure 125_2 disposed at a main side of the first substrate 120, e.g. a top side of the first substrate 120. The second substrate 140 is provided with a second electrode structure 145_2 disposed at a main side of the second substrate 140 opposite the main side of the first substrate 120. That is, the second electrode structure 145_2 may, e.g., be implemented at a bottom side of the second substrate 140.

The first and/or second electrode structures 125_2 and 145_2, respectively, form the electrodes of the ion trap(s) of the device 100. The first electrode structure 125_2 may be structured out of metal layer m3 of a first metal structure 125 provided at the first substrate 120 and/or the second electrode structure 145_2 may be structured out of a metal layer m3 of a second metal structure 145 provided in the second substrate 140. Further, first contact pads 125_1 may be structured in the metal layer m3 of the first metal structure 125 and/or second contact pads 145_1 may be structured in the metal layer m3 of the second metal structure 145.

In some examples the first metal structure 125 and/or the second metal structure 145 may be single layer metal structures, i.e. metal structures which only consist of the metal layer m3. However, in the following, without loss of generality, the first metal structure 125 is exemplified as a first multi-layer metal structure 125 and the second metal structure 145 is exemplified as a second multi-layer metal structure 145.

The first multi-layer metal structure 125 may further include external terminals 125_3. The external terminals 125_3 may, e.g., also be formed in metal 3 (m3). The external terminals 125_3 may be configured to connect the device 100 (and in particular the ion traps thereof) via electrical connections 170 (e.g. wire bonds) to external circuitry (not shown).

More specifically, the first multi-layer metal structure 125 and/or the second multi-layer metal structure 145 may each include e.g. at least three metal layers. The lowest metal layer, so-called metal 1 (m1), may be configured to screen the respective substrate 120, 140 electrically. Metal 1 (m1) may be a continuous metal layer. Metal 2 (m2), the metal layer above metal 1, may be a redistribution layer, i.e. may be a structured metal layer which is used for wiring, e.g. for wiring the first contact pads 125_1 and first electrode structures 125_2 and/or the second contact pads 145_1 and the second electrode structures 145_2. Metal 2 (m2) may be electrically insulated from metal 1 (m1) by an insulating layer arranged between metal 1 (m1) and metal 2 (m2). Metal 3 (m3), the top metal layer, may define the electrode arrangement for the one or plurality of ion traps and, e.g., the contact pad arrangement for an electrical interconnect (not shown) between the first multi-layer metal structure 125 and the second multi-layer metal structure 145.

As mentioned above, in the example of Figure 1, metal 3 (m3) forms the first contact pads 125_1 and first electrode structures 125_2 and the second contact pads 145_1 and second electrode structures 145_2. Hence, metal 3 (m3) is typically a structured metal layer comprising RF electrodes and, optionally, DC electrodes and contact pads. Metal 3 (m3) is electrically connected to metal 2 (m2) by vias which connect through an electrically insulating layer arranged between metal 2 (m2) and metal 3 (m3). Three metal layers m1, m2, m3 are used on each (e.g. semiconductor) substrate 120, 140 in the example shown. More or less metal layers may be used if needed.

The metal layers m1, m2, m3 may be manufactured during microfabrication processing. Metals such as, e.g., Cu, Al, Au, Pt, Pd, Ti, TiW etc. may be used for metal layers m1, m2, m3. The surface of metal 3 (m3) may be plated by a chemically inert and electrically conductive material such as, e.g., Au or Pt to avoid surface charge generation. The insulating layers between the metal layers m1, m2, m3 may, e.g., comprise or be of a hard passivation material such as, e.g., silicon nitride and/or silicon oxide.

Microfabrication techniques for metal layer formation and structuring may, e.g., involve photolithography methods (e.g. including photoresist application, patterning, etching) and/or deposition techniques (e.g. chemical vapor deposition (CVD), physical vapor deposition (PVD), sputtering) and/or plating techniques (e.g. electroless plating, galvanic plating). Further, microfabrication techniques for electrode formation and structuring may include etching processes for structuring photoresist layers, insulating layers and metal layers and/or semiconductor doping techniques for forming electrodes of highly doped semiconductor material (e.g. degenerate silicon electrodes) in the first and/or the second substrates 120, 140 (of a semiconductor material).

Various ion manipulation zones may be implemented in the space between the first substrate 120 and the second substrate 140. Such different ion manipulation zones may implement a number of different functionalities in terms of ion loading, ion handling and ion control.

For instance, ions 180 can be trapped in a processing zone PZ in which quantum operations between trapped ions 180 (then acting as so-called quantum bits (qubits)) may be carried out. If the ions 180 are trapped as qubits, the qubit states need to be controlled and read out. Hence, a processing zone PZ typically requires the access of laser light for laser-based state preparation of trapped ions and laser light for reading out the qubit states (or alternatively the read-out operation may be carried out in a separate read-out zone). Further, fluorescence light from ions 180 in the processing zone PZ may need to be collected for state measurement.

The device 100 for controlling trapped ions may further include a memory zone MZ in which ions 180 are cooled and stored. Laser light is needed for ion cooling. Further, ions 180 may be moved between the memory zone MZ and the processing zone PZ.

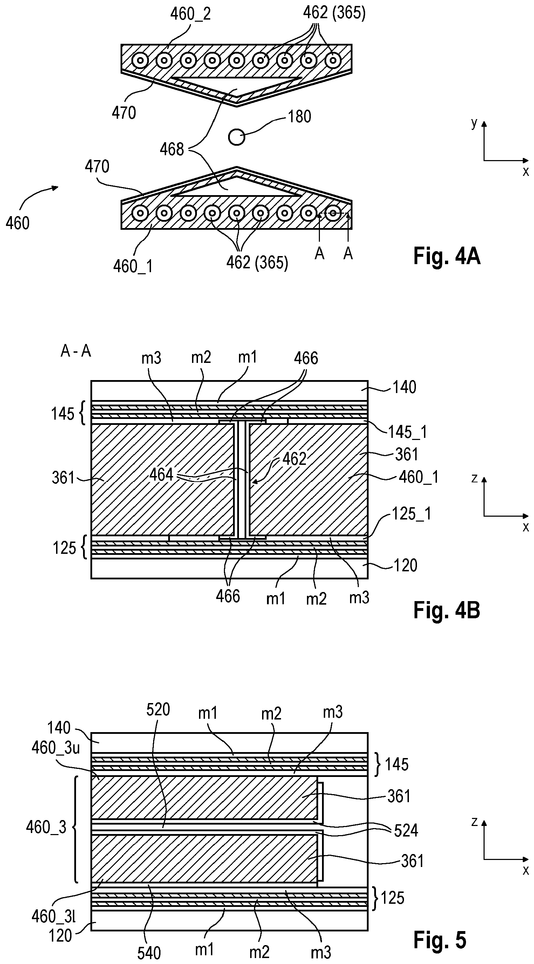

Figure 2 illustrates by way of example that the device 100 allows laser light 220 to be introduced to the center region of the device 100 in lateral directions at one, multiple or all sides of the device 100 (e.g. through free spaces between spacer members 360 (Figure 3) or through optical ports (e.g. optical ducts 520, 540 of Figure 5) implemented in spacer members 360). As in future applications a high number of ions 180 in a plurality of ion manipulation zones are to be manipulated, it may be difficult to provide for suitable and sufficient lateral optical access to the trapped ions 180.

Further, the arrow OC indicates optical crosstalk between ions 180 trapped in different ion manipulation zones (e.g. processing zone PZ and memory zone MZ) caused by scattered light. The higher the number of ions 180, the more difficult it is to suppress undesired optical crosstalk OC.

More specifically, two different kinds of optical crosstalk OC may occur. In the example shown, the lateral laser beam 220 is focused on the ions in the processing zone PZ but a fraction of the divergent and surface-scattered light will inadvertently also hit the ions in the memory zone MZ, thus causing dephasing of their quantum states. Further, when the quantum state of an ion in the processing zone PZ is read out, it will emit light at the read-out wavelength in all directions. If this light is absorbed by other ions, e.g. in the memory zone MZ, their quantum state collapses due to being read out.

In particular, trapped ions 180 in a processing zone PZ of a quantum computing device need to be protected from scattered light and interfering electrical fields. Therefore, a high degree of optical accessibility and a high degree of interference screening is desirable in device 100 and particular for a processing zone PZ in device 100.

Another problem which aggravates with increasing number of ions 180 is the growing complexity of the electrical interconnect between external circuitry (not shown) and the first and second electrode structures 125_2, 145_2.

Referring to Figure 3, a spacer 360 is disposed between and bonded to the first substrate 120 and the second substrate 140. The spacer 360 defines the distance between the first and second substrates 120, 140. As will described further below in greater detail, the spacer 360 may comprise a number of spacer members and is provided with functionality to cope with one or more of the problems addressed above.

More specifically, the spacer 360 includes an electrical interconnect 365 which electrically connects the first metal structure 125 to the second metal structure 145. The electrical interconnect 365 may pass as a through connection through bulk material 361 of the spacer 360. For instance, the spacer material 361 may, e.g., be glass or any other dielectric material, in particular any dielectric material which provides for low RF loss during operation.

According to some examples, the second substrate 140 may not be provided with any external terminals. Differently put, the entire electrical connectivity to external circuitry (not shown) may be provided by the first substrate 120 and, e.g., more specifically by the external terminals 125_3 implemented at the first substrate 120. The electrical connectivity between the external circuitry (not shown) and the second metal structure 145 may exclusively be routed via the spacer 360.

Figure 4A illustrates a top view on an exemplary spacer 460. The spacer 460 may be composed of a plurality of separate spacer members. In the example shown in Figure 4A, the spacer 460 comprises two spacer members 460_1, 460_2.

The spacer members 460_1, 460_2 may be arranged at longitudinal sides (in X-direction) of the device 100. For instance, the spacer members 460_1, 460_2 may extend along the full length of the device 100.

The spacer members 460_1, 460_2 each may include an electrical interconnect 365 which may, e.g., comprise a plurality of vertical electrical through connections. The vertical through connections may, e.g., be implemented by vertical holes 462 with metallized inner walls or filled with conducting material such as, e.g., metal or doped semiconducting material. The vertical holes 462 may, e.g., be arranged in a row. Each row of vertical holes 462 may, e.g., be aligned with a longitudinal side of the device 100.

Figure 4B illustrates a view of an exemplary vertical hole 462 extending through the spacer 460 (e.g. spacer member 460_1) along sectional line A-A of Figure 4A. The sectional view also illustrates the first and second substrates 120, 140 attached to the spacer 460. A sidewall metal 464 of the metallized inner walls of the holes 462 may, e.g., be of gold. The sidewall metal 464 connects to bonding areas 466 (e.g. also of Au) on the bottom and top surfaces of the spacer 460. The bonding areas 466 are bonded to first and second contact pads 125_1, 145_1 at the first and second substrates 120, 140, respectively. As will be described in more detail further below, these bonds may e.g. be implemented by wafer bonds, i.e. generated on wafer-level.

The vertical holes 462 may be manufactured by wafer-level microfabrication techniques and may therefore be spaced apart from each other by short distances such as, e.g., only a few or a few tens of micrometers between adjacent hole walls. This may allow to accommodate the entire electrical connectivity between the first substrate 120 and the second substrate 140 in the spacer 460.

The spacer 460 (e.g. spacer members 460_1, 460_2) may further provide for extra bonding areas 468. Similar as the bonding areas 466, the extra bonding areas 468 may be formed by a metal layer, e.g. a layer of the same metal as the metal of the bonding areas 466 (e.g. Au). However, depending on the technique used for bonding (e.g. wafer-bonding), semiconductor material or glass may also be used for bonding purposes.

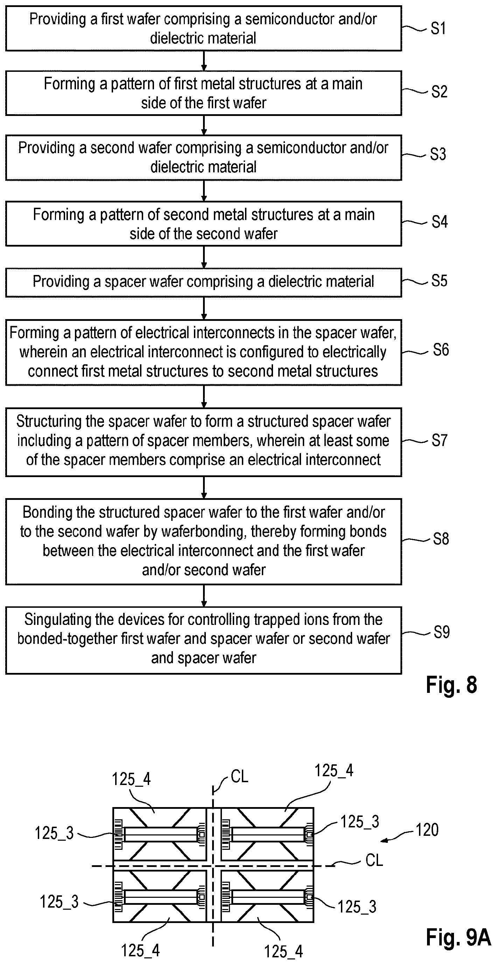

Generally, the first substrate 120 and the second substrate 140 may be represented by wafers or by chips which have been diced out of respective wafers. If the first substrate 120 and the second substrate 140 are wafers, the spacer 460 or spacer members 460_1, 460_2 are bonded to the first substrate 120 (wafer) and/or to the second substrate 140 (wafer) by wafer-bonding techniques chosen to be suitable for bonding the material 361 of the spacer 460 (or spacer members 460_1, 460_2) and the material of the first substrate 120 and/or the second substrate 140 (se also Figures 8A-8D). Alternatively, the chosen wafer-bonding techniques may be suitable for bonding materials of respective layers used as bonding interface layers formed on the first substrate 120 and/or the second substrate 140 and/or on the spacer 460 - such as, e.g., the bonding areas 466 and/or the extra bonding areas 468.

The bond between the spacer 460 and the first substrate 120 or the spacer 460 and the second substrate 140 may, e.g., be a glass bond or an eutectic bond or an anodic bond or a thermocompression bond. Further suitable bonding techniques are adhesive bonding (an intermediate layer is applied to one of the wafers, e.g. by spin-coating, spray, etc. and "sticks" the wafers together once it is cured) and SLID (Solid Liquid Interdiffusion) bonding, where a two-phase system with different melting points is used to generate an intermetallic phase, wherein the intermetallic phase generation happens already at relatively low temperatures.

Wafer-bonding techniques allow for alignment accuracy between the first substrate 120, the spacer 360, 460 and the second substrate 140 in a range of, e.g., a few micrometers. This allows to functionalize the spacer 460 to provide for a dense multi-channel electrical interconnect between the first substrate 120 and the second substrate 140. Further, this allows to increase the number of ions 180 trapped between the first substrate 120 and the second substrate 140 due to the high alignment accuracy by which the first and second (e.g. multi-layer) metal structures 125, 145 may be aligned relative to each other.

Further, wafer bonds can provide for high mechanical stability and robustness. High mechanical stability and robustness are required for advanced scalability of the device 100 to higher numbers of ions 180.

For instance, the first substrate 120 and/or the second substrate 140 may be implemented by a bulk silicon substrate and/or the spacer 460 may be a glass spacer (i.e. the spacer material 361 is of glass). In other examples, the first substrate 125 and/or the second substrate 145 may be of silicon carbide, silicon-on-insulator, fused silica, or sapphire. All these materials can be processed on wafer-level and are suitable for wafer-bonding.

As shown in Figure 4A, the spacer 460 (e.g. spacer members 460_1, 460_2) may be provided with inner metallized sidewalls 470 facing the ion trap. The metallized sidewalls 470 may be of a metal having a high work function of, e.g., equal to or greater than 4 eV to avoid photoemission of electrons by the readout laser. Further, the metal of the metallized sidewalls 470 should be chemically inert to minimize charge scattering by surface contamination. For instance, Au, Pt or Pd are suitable candidates for surface metallization of the metallized sidewalls 470.

Further, it is beneficial if the material for forming the metallized sidewalls 470 is the same material as the material used as bond material, i.e. the same material as used for the bonding areas 466 and/or the extra bonding areas 468. These materials are further required to provide for high mechanical properties and robustness to deal with the thermal stress during operation of the device 100.

Further, the material 361 of the spacer 460 (or spacer members 460_1, 460_2) is desired to feature low RF-losses (at approximately 1-50 MHz) to keep the thermal power dissipation of the RF electrodes of the first electrode structure 125_2 and/or the second electrode structure 145_2 low.

Considering these constrains, it has been found that the choice of Au as sidewall metal 464, bonding area metal 466, extra bonding area metal 468 (if existing) and metal of the metallized sidewalls 470 in combination with a spacer material 361 of glass provides for optimum characteristics of the device 100. Glass provides for a very low thermal power dissipation of the RF electrodes. The work function of gold is 5.3 eV and hence large enough to avoid photoemission by the readout laser. Au is chemically inert. Further, Au allows Au-Au thermocompression wafer bonds and Au-Si eutectic wafer bonds. Both these wafer bonds (i.e. Au-Au and Au-Si) feature high robustness to successfully cope with thermal stress.

Additional functionality which may be implemented in the spacer 460 (e.g. in individual spacer members 460_1, 460_2) is optical accessibility. More specifically, one or more optical ports to allow laser light to be introduced and/or focused into the space between the first and second substrate 120, 140 may be included in the spacer 460. For instance, referring to Figure 5, the spacer 460 may include at least one spacer member 460_3 which is provided with a horizontal optical duct 520 configured to pass light through the spacer member 460_3 to the ion trap. The optical duct 520 may be defined between a lower portion 460_31 of the spacer member 460_3 and an upper portion 460_3u of the spacer member 460_3 located above the lower portion 460_31. The horizontal optical duct 520 may be formed by one or more horizontally etched openings (e.g. formed as one or more slits) having, e.g., metallized inner walls 524. All metals mentioned above and, in particular, Au may be used for optical duct metallization.

In one example the optical duct 520 may be an optical waveguide (etched waveguide).

Further, the spacer 460 may include at least one spacer member (e.g. spacer member 460_3) provided with another optical duct 540 configured to pass light through the spacer member 460_3 to the ion trap. The optical duct 540 may be located at an interface between the spacer member 460_3 and the first substrate 120 (or, alternatively or in addition, at an interface between the spacer member 460_3 and the second substrate 140). The optical duct 540 may be formed by one or more doped, micro-structured areas at a surface of the spacer member 460_3 (here, e.g., the lower surface of the lower portion 460_31 of the spacer member 460_3).

The optical duct 540 may, e.g., form an optical waveguide, e.g. a doped and structured interface waveguide.

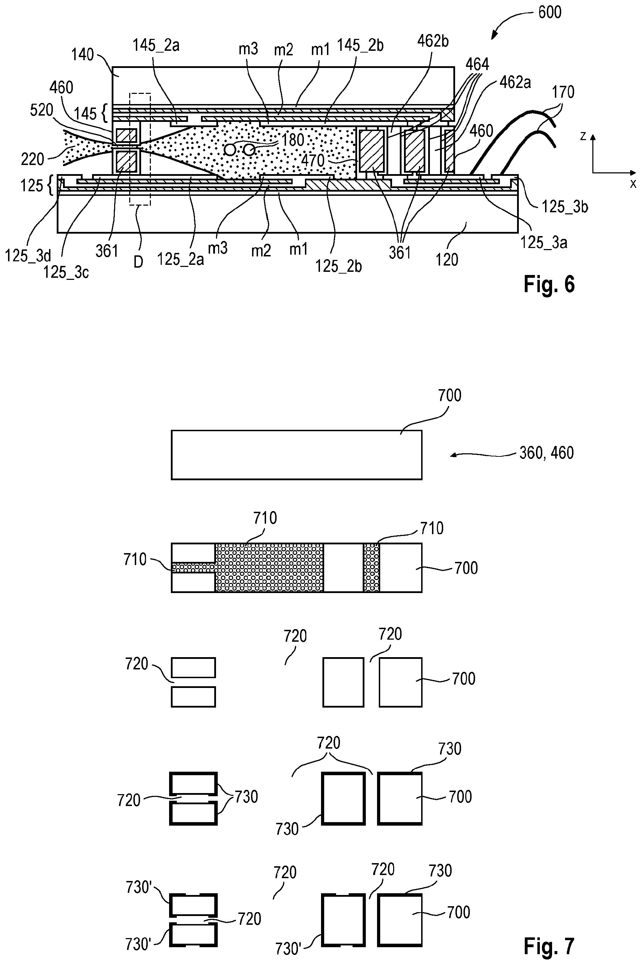

Referring to Figure 6, a device 600 for controlling trapped ions may be equipped with an optical port, e.g. optical duct 520 or waveguide as illustrated in Figure 5 (Figure 5 may correspond to detail D of Figure 6) and with a plurality of vertical holes 462 with metallized inner walls or conductive fillings as, e.g., illustrated in Figures 4A and 4B. Laser light 220 is coupled to the ion trap through the optical duct 520 implemented in the spacer 460. The wafer light 220 interacts with the ions 180 and is blocked at the opposite side by a metallized sidewall 470 of the spacer 460.

That is, the metallized sidewall 470 of the spacer 460, which can be used in combination with or independent of the optical duct 520, may be used as an optical blocker to prevent scattered light to reach other ion trapping zones (not shown in Figure 6) and to prevent photoemission of electrons. Optical blockers integrated in the spacer 460 are described in more detail further below (Figures 8B and 8D). It is to be noted that the spacer 460 does not need to be a single part spacer but may be composed of a plurality of spacer members 460_1, 460_2, 460_3 (see Figures 4A-B, 5).

The spacer 460 is further provided with vertical through connections, e.g. vertical holes 462 with metallized inner walls (or full metal fillings), of which two vertical holes 462a, 462b are shown in Figure 6. The metal of the metallized sidewall 470 used as an optical blocker may, e.g., be the same as the sidewall metal 464 used for the electrical interconnect 365. The outer vertical hole 462a interconnects the second electrode structure 145_2a at the second substrate 140 via metal m2 of the second metal structure 145 to an external terminal 125_3a at the first substrate 120. The inner vertical hole 462b interconnects the second electrode structure 145_2b via metal m2 of the first metal structure 125 with the external terminal 125_3b of the first metal structure 125. First electrode structures 125_2a and 125_2b of the first metal structure 125 are routed to external terminals 125_3c and 125_d, respectively, located, e.g., at the opposite side of the device 600.

Differently put, only a (central) portion of the first substrate 120 may overlap with the second substrate 140 so as to keep the external terminals 125_3a, 125_3b, 125_3c, 125_3d accessible for electrically connecting them to external circuitry (e.g. by wire bonding). Further, Figure 6 illustrates an example in which the wafer bond areas between the spacer 460 and the first and second substrates 120, 140 may be formed by metal-glass bonds and/or by metal-metal bonds (e.g. Au-Au thermocompression bonds).

Figure 7 illustrates manufacturing stages of a process of manufacturing horizontal optical ducts and/or vertical through connections and/or optical blockers in a glass spacer 360, 460. By way of example, a LIDE (laser induced deep etching) process can be used. The LIDE technique allows to generate deep structures in glass with a high aspect ratio. The structures (e.g. holes, slits, etc.) may have width dimensions as small as only a few µm.

A glass substrate 700 (which may, e.g., be a glass wafer) is subjected to a LIDE process. The glass is locally modified by laser light according to the desired layout. By this process referred to as LIDE laser patterning, modified glass areas 710 as exemplified in Figure 7 are generated.

The modified glass areas 710 of the glass substrate 700 are removed by wet chemical etching, e.g. HF etching, to generate openings (e.g. ducts, holes, slits, cutouts etc.) 720.

Optionally, the side walls of the openings 720 are coated by metal layers 730. Metal coating may be carried out by metal sputtering or other PVD (physical vapor deposition) or CVD (chemical vapor deposition) processes. Metal coating as shown in Figure 7 may be used to produce the metallized inner wall 524, the sidewall metal 464, the metallized side walls 470 and/or the vertical holes with metallized inner wall 462. Alternatively or additionally, electroless plating can be used for metal deposition.

The metal layers 730 may optionally be structured by, e.g., spray-coating lithography and selective etching to provide for structured metal layers 730'.

Referring to Figure 8, an exemplary process of manufacturing devices for controlling trapped ions such as, e.g., devices 100, 600 uses microfabrication steps and wafer-bonding techniques. Though the exemplary process of Figure 8 uses wafer-bonding techniques, an analogous process can be carried out in which the first substrate 120, the second substrate 140 and the spacer 360, 460 are bonded on chip level rather than on wafer-level, i.e. in which the single devices 100, 600 are assembled device by device.

More specifically, at S1 a first wafer (bottom wafer) comprising a semiconductor and/or dielectric material is provided. The first wafer may have dimensions in the lateral direction larger than, e.g., 4 inches, 6 inches, 8 inches, 10 inches or 12 inches.

At S2 a pattern of first metal structures is formed at a main side of the first wafer. Standard wafer-level microfabrication techniques including metal deposition techniques (e.g. PVD, CVD, sputtering) and lithography techniques may be used. For example, Figure 9A illustrates a top view on an exemplary first wafer on which a pattern of first metal structures is formed (here, a portion of the pattern including four metal structures is depicted).

At S3 a second wafer (top wafer) comprising a semiconductor and/or dielectric material is provided. The second wafer may be of a different material as the first wafer or may be of the same material as the first wafer. The second wafer may have dimensions in the lateral direction equal to or larger than, e.g., 4 inches, 6 inches, 8 inches, 10 inches or 12 inches.

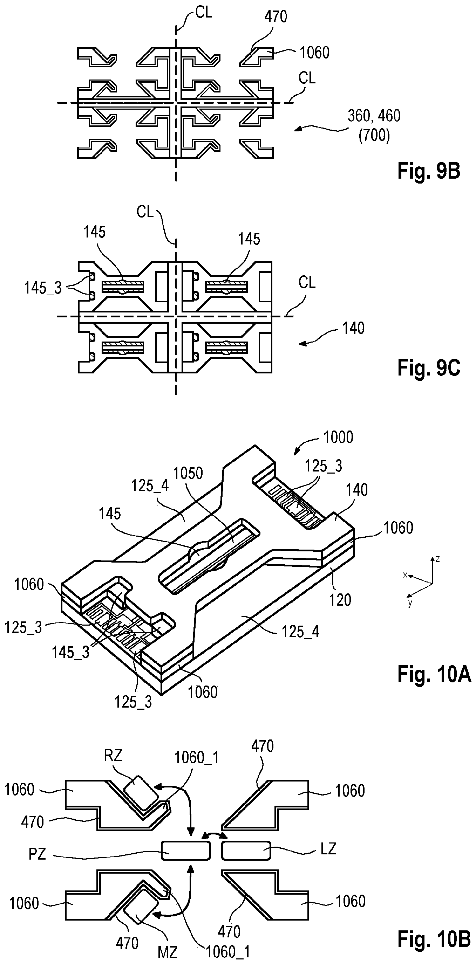

At S4 a pattern of second metal structures is formed at a main side of the second wafer. The pattern of second metal structures may be formed by wafer-level microfabrication techniques as mentioned above. Each pattern may provide for a second metal structure of a specific device for controlling trapped ions. For example, Figure 9C illustrates a top view on an exemplary second wafer on which a pattern of second metal structures is formed (here, a portion of the pattern including four metal structures is depicted).

At S5 a spacer wafer comprising a dielectric material is provided. The spacer wafer may be of glass, sapphire, fused silica, a semiconductor material (e.g. silicon), etc.

At S6 a pattern of electrical interconnects is formed in the spacer wafer, wherein an electrical interconnect is configured to electrically connect first metal structures to second metal structures. The electrical interconnect may, e.g., be implemented by vertical holes with metallized inner walls as described above.

At S7 the spacer wafer is structured to form a structured spacer wafer including a pattern of spacer members, wherein at least some of the spacer members comprise an electrical interconnect. For example, Figure 9B illustrates a top view on an exemplary glass spacer wafer including a pattern of spacer members (here, a portion of the pattern including spacer members for four devices is depicted).

By way of example, Figure 4A illustrates two spacer members 460_1, 460_2 structured from the spacer wafer. This structuring process can be performed by wafer-level microfabrication techniques, e.g. techniques known in the art of micro-electro-mechanical systems (MEMS). Such processes allow to produce micro-systems with high topology (e.g. one or more hundreds of micrometers or more) as used in the devices for controlling trapped ions as disclosed herein.

At S8 the structured spacer wafer is bonded to the first wafer and/or to the second wafer by wafer-bonding. As mentioned above, this wafer-bonding step may be carried out by wafer-bonding techniques such as, e.g., glass bonding, eutectic bonding, anodic bonding, thermocompression bonding, adhesive bonding or solid liquid interdiffusion bonding.

In some examples glass wafer-bonding techniques may be used, which can be applied for generating bonds between all combinations of semiconductor and/or dielectric materials. Glass bonding does not require any metal layer as bonding agent. For instance, in particular if the spacer wafer comprises or is of glass, glass-bonding techniques may be used.

Eutectic bonding may, e.g., be used for bonding a semiconductor (e.g. silicon wafer) to another semiconductor wafer (e.g. silicon wafer) or to a glass wafer (e.g. the spacer wafer). In eutectic bonding an intermediate interface metal layer (e.g. of Au or Al) is used to couple the wafers to be bonded.

According to other examples, anodic bonding may be used. In anodic bonding a glass wafer or a glass layer on a semiconductor wafer is bonded to another semiconductor wafer. That is, this technique does not require any metal layer for bonding. It allows both to bond semiconductor wafers (plus an intermediate glass layer) or a semiconductor wafer and glass wafer together.

Other suitable wafer-bonding techniques comprise thermocompression bonding (also referred to as diffusion bonding). In thermocompression bonding two metals, e.g. Au-Au, are brought into contact and force and heat is applied simultaneously. This bonding technique may, e.g., be used for device 600 for controlling trapped ions by virtue of the via metal layers 462a, 462b and the corresponding metal layers on the first and/or second substrates (wafers) 120, 140.

At S9 the devices for controlling trapped ions from the bonded-together first wafer and spacer wafer or second wafer and spacer wafer (or bonded-together first wafer, spacer wafer and second wafer) are singulated. Device singulation may be carried out at the wafer stack along common cutting lines CL (see Figures 9A, 9B, 9C).

Figure 10A illustrates an exemplary device 1000 for controlling trapped ions after device singulation. The device 1000 corresponds to the wafer and spacer patterning and device singulation (along cutting lines CL) shown in Figures 9A-9C.

The device 1000 is similar to devices 100 and 600, and reference is made to the above description in order to avoid reiteration. The first metal structure 125 may comprise external terminals 125_3 available for electrically connecting RF and DC electrodes of the first metal structure 125 to external circuitry (not shown) and metallized zones 125_4 located in areas of free space defined between the spacer members 1060.

The second substrate 140 may optionally comprise a top side opening 1050. The second metal structure 145 shaped for example as stripe electrodes may, e.g., be connected to external terminals 145_3.

As apparent from Figures 9A-9C and Figure 10, the design of the device 1000 for controlling trapped ions provides for vertical (through top side opening 1050) and lateral optical access to the ion trap zone. The spacer members 1060 may be aligned with corners of the first substrate 120 and/or of the second substrate 140 due to the device singulation process along cutting lines CL.

Figure 10B is a top view on an exemplary spacer comprising the spacer members 1060 shown in Figures 9B and 10A. The features exemplified by Figure 10B can be used in all spacers 360, 460 and all spacer members 360_1, 360_2, 360_3 disclosed herein.

Figure 10B illustrates that some of the spacer members 1060 (here, the two left spacer members 1060) are equipped with intergral optical blockers 1060_1. As mentioned before, the optical blockers 1060_1 may have metallized sidewalls 470.

The optical blockers 1060_1 may prevent optical crosstalk between ions held in different ion manipulation zones. Some of the ion manipulation zones may be separated from each other behind the optical blockers 1060_1. More specifically, Figure 10B illustrates by way of example an ion memory zone MZ (i.e. ion storage region) hidden behind an optical blocker 1060_1 and/or an ion readout zone RZ hidden behind an optical blocker 1060_1. An ion processing zone PZ and/or a loading zone LZ are, in this example, located in a central region of the device 1000 and shielded from the memory zone MZ and the readout zone RZ by the optical blockers 1060_1. The arrows depicted in Figure 10B illustrate possible lateral ion shuttling between the different ion manipulation zones MZ, PZ, RZ, LZ.

The following examples pertain to further aspects of the disclosure:

Example 1 is a device for controlling trapped ions. The device includes a first substrate comprising a semiconductor and/or dielectric material. A first metal structure is disposed at a main side of the first substrate. The device further comprises a second substrate comprising a semiconductor and/or dielectric material. A second metal structure is disposed at a main side of the second substrate opposite the main side of the first substrate. A spacer is disposed between and bonded to the first substrate and the second substrate. The spacer comprises an electrical interconnect which electrically connects the first metal structure to the second metal structure. A bond between the spacer and the first substrate or the spacer and the second substrate is a bond formed by waferbonding. At least one ion trap is configured to trap ions in a space between the first substrate and the second substrate, the first metal structure and the second metal structure comprising electrodes of the ion trap.

In Example 2, the subject matter of Example 1 can optionally include wherein the bond is a glass bond or an eutectic bond or an anodic bond or a thermocompression bond or an adhesive bond or a solid liquid interdiffusion bond.

In Example 3, the subject matter of Example 1 or 2 can optionally include wherein the spacer comprises at least one spacer member provided with a horizontal optical duct configured to pass light through the spacer member to the ion trap, the optical duct being defined between a lower portion of the spacer member and an upper portion of the spacer member.

In Example 4, the subject matter of Example 1 or 2 can optionally include wherein the spacer comprises at least one spacer member provided with a horizontal optical duct configured to pass light through the spacer member to the ion trap, the optical duct being located at an interface between the spacer member and the first substrate or the second substrate.

In Example 5, the subject matter of Example 3 or 4 can optionally include wherein the optical duct is formed as an opening having a metallized inner wall.

In Example 6, the subject matter of Example 3 or 4 can optionally include wherein the optical duct is an optical waveguide.

In Example 7, the subject matter of any preceding Example can optionally include wherein the electrical interconnect comprises a plurality of vertical holes with metallized inner walls.

In Example 8, the subject matter of any preceding Example can optionally include wherein the spacer comprises at least one spacer member provided with metallized side walls facing the ion trap.

In Example 9, the subject matter of any preceding Example can optionally include wherein the spacer comprises at least one spacer member configured as an inner partition wall of the device, the spacer member is configured to act as an optical shield between a first ion trap and a second ion trap of the device.

In Example 10, the subject matter of any preceding Example can optionally include wherein the spacer is a glass spacer.

In Example 11, the subject matter of any preceding Example can optionally include wherein metallized walls of the spacer are of Au, Pt, Pd, Nb, Al, or Cu.

Example 12 is a method of manufacturing a device for controlling trapped ions. The method comprises providing a first wafer comprising a semiconductor and/or dielectric material; forming a pattern of first metal structures at a main side of the first wafer; providing a second wafer comprising a semiconductor and/or dielectric material; forming a pattern of second metal structures at a main side of the second wafer; providing a spacer wafer comprising a dielectric material; forming a pattern of electrical interconnects in the spacer wafer, wherein an electrical interconnect is configured to electrically connect first metal structures to second metal structures; structuring the spacer wafer to form a structured spacer wafer including a pattern of spacer members, wherein at least some of the spacer members comprise an electrical interconnect; bonding the structured spacer wafer to the first wafer and/or to the second wafer by waferbonding, thereby forming bonds between the electrical interconnect and the first wafer and/or the second wafer; and singulating the devices for controlling trapped ions from the bonded-together first wafer and spacer wafer or second wafer and spacer wafer.

In Example 13, the subject matter of Example 12 can optionally include wherein waferbonding is carried out by glass bonding or eutectic bonding or anodic bonding or thermocompression bonding or adhesive bonding or solid liquid interdiffusion bonding.

In Example 14, the subject matter of Example 12 or 13 can optionally include metallizing side walls of spacer members on wafer-level.

In Example 15, the subject matter of any of Examples 12 to 14 can optionally include forming horizontal optical ducts or optical waveguides in spacer members on wafer level.

Example 16 is a device for controlling trapped ions. The device includes a first substrate comprising a semiconductor and/or dielectric material. A first metal structure is disposed at a main side of the first substrate. The device further comprises a second substrate comprising a semiconductor and/or dielectric material. A second metal structure is disposed at a main side of the second substrate opposite the main side of the first substrate. A spacer is disposed between the first substrate and the second substrate. The spacer comprises an electrical interconnect which electrically connects the first metal structure to the second metal structure. At least one ion trap is configured to trap ions in a space between the first substrate and the second substrate, the first metal structure and the second metal structure comprising electrodes of the ion trap.

In Example 17, the subject matter of Example 16 can optionally include wherein a bond between the spacer and the first substrate or the spacer and the second substrate is a bond formed by waferbonding.

In Example 18, the subject matter of Example 17 can optionally include wherein the bond is a glass bond or an eutectic bond or an anodic bond or a thermocompression bond or an adhesive bond or a solid liquid interdiffusion bond.

Example 19 is a device for controlling trapped ions. The device includes a first substrate comprising a semiconductor and/or dielectric material. A first metal structure is disposed at a main side of the first substrate. The device further comprises a second substrate comprising a semiconductor and/or dielectric material. A second metal structure is disposed at a main side of the second substrate opposite the main side of the first substrate. A spacer is disposed between the first substrate and the second substrate. At least one ion trap is configured to trap ions in a space between the first substrate and the second substrate, the first metal structure and the second metal structure comprising electrodes of the ion trap. The spacer comprises at least one spacer member provided with a horizontal optical duct configured to pass light through the spacer member to the ion trap, the optical duct being defined between a lower portion of the spacer member and an upper portion of the spacer member.

In Example 20, the subject matter of Example 19 can optionally include wherein the optical duct is formed as an opening having a metallized inner wall.

In Example 21, the subject matter of Example 19 can optionally include wherein the optical duct is an optical waveguide.

In Example 22, the subject matter of any of Examples 19 to 21 can optionally include wherein the spacer comprises an electrical interconnect which electrically connects the first metal structure to the second metal structure, wherein the electrical interconnect comprises a plurality of vertical holes with metallized inner walls.

In Example 23, the subject matter of any of Examples 19 to 22 can optionally include wherein the spacer is a glass spacer.

Example 24 is a device for controlling trapped ions. The device includes a first substrate comprising a semiconductor and/or dielectric material. A first metal structure is disposed at a main side of the first substrate. The device further comprises a second substrate comprising a semiconductor and/or dielectric material. A second metal structure is disposed at a main side of the second substrate opposite the main side of the first substrate. A spacer is disposed between the first substrate and the second substrate. At least one ion trap is configured to trap ions in a space between the first substrate and the second substrate, the first metal structure and the second metal structure comprising electrodes of the ion trap. The spacer comprises at least one spacer member provided with a horizontal optical duct configured to pass light through the spacer member to the ion trap, the optical duct being located at an interface between the spacer member and the first substrate or the second substrate.

In Example 25, the subject matter of Example 24 can optionally include wherein the optical duct is formed as an opening having a metallized inner wall.

In Example 26, the subject matter of Example 24 can optionally include wherein the optical duct is an optical waveguide.

In Example 27, the subject matter of any of Examples 24 to 26 can optionally include wherein the spacer comprises an electrical interconnect which electrically connects the first metal structure to the second metal structure, wherein the electrical interconnect comprises a plurality of vertical holes with metallized inner walls.

In Example 28, the subject matter of any of Examples 24 to 27 can optionally include wherein the spacer is a glass spacer.

Example 29 is a device for controlling trapped ions. The device includes a first substrate comprising a semiconductor and/or dielectric material. A first metal structure is disposed at a main side of the first substrate. The device further comprises a second substrate comprising a semiconductor and/or dielectric material. A second metal structure is disposed at a main side of the second substrate opposite the main side of the first substrate. A spacer is disposed between the first substrate and the second substrate. At least one ion trap is configured to trap ions in a space between the first substrate and the second substrate, the first metal structure and the second metal structure comprising electrodes of the ion trap. The spacer comprises at least one spacer member provided with metallized side walls facing the ion trap.

In Example 30, the subject matter of Example 29 can optionally include wherein the metallized side walls of the spacer are of Au, Pt, Pd, Nb, Al, or Cu.

In Example 31, the subject matter of Example 29 or 30 can optionally include wherein the spacer is a glass spacer.

Example 32 is a device for controlling trapped ions. The device includes a first substrate comprising a semiconductor and/or dielectric material. A first metal structure is disposed at a main side of the first substrate. The device further comprises a second substrate comprising a semiconductor and/or dielectric material. A second metal structure is disposed at a main side of the second substrate opposite the main side of the first substrate. A spacer is disposed between the first substrate and the second substrate. At least one ion trap is configured to trap ions in a space between the first substrate and the second substrate, the first metal structure and the second metal structure comprising electrodes of the ion trap. The spacer comprises at least one spacer member configured as an inner partition wall of the device, the spacer member is configured to act as an optical shield between a first ion trap and a second ion trap of the device.

In Example 33, the subject matter of Example 32 can optionally include wherein the at least one spacer member configured as an inner partition wall of the device has metallized walls of Au, Pt, Pd, Nb, Al, or Cu.

In Example 34, the subject matter Example 32 or 33 can optionally include wherein the spacer is a glass spacer.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A device for controlling trapped ions, the device comprising:
a first substrate comprising a semiconductor and/or dielectric material;
a first metal structure disposed at a main side of the first substrate;
a second substrate comprising a semiconductor and/or dielectric material;
a second metal structure disposed at a main side of the second substrate opposite the main side of the first substrate;
a spacer disposed between and bonded to the first substrate and the second substrate, the spacer comprising an electrical interconnect which electrically connects the first metal structure to the second metal structure, wherein a bond between the spacer and the first substrate or the spacer and the second substrate is a bond formed by waferbonding; and
at least one ion trap configured to trap ions in a space between the first substrate and the second substrate, the first metal structure and the second metal structure comprising electrodes of the ion trap.

2. The device of claim 1, wherein the bond is a glass bond or an eutectic bond or an anodic bond or a thermocompression bond or an adhesive bond or a solid liquid interdiffusion bond.

3. The device of claim 1 or 2, wherein the spacer comprises at least one spacer member provided with a horizontal optical duct configured to pass light through the spacer member to the ion trap, the optical duct being defined between a lower portion of the spacer member and an upper portion of the spacer member.

4. The device of claim 1 or 2, wherein the spacer comprises at least one spacer member provided with a horizontal optical duct configured to pass light through the spacer member to the ion trap, the optical duct being located at an interface between the spacer member and the first substrate or the second substrate.

5. The device of claim 3 or 4, wherein the optical duct is formed as an opening having a metallized inner wall.

6. The device of claim 3 or 4, wherein the optical duct is an optical waveguide.

7. The device of any of the preceding claims, wherein the electrical interconnect comprises a plurality of vertical holes with metallized inner walls.

8. The device of any of the preceding claims, wherein the spacer comprises at least one spacer member provided with metallized side walls facing the ion trap.

9. The device of any of the preceding claims, wherein the spacer comprises at least one spacer member configured as an inner partition wall of the device, the spacer member is configured to act as an optical shield between a first ion trap and a second ion trap of the device.

10. The device of any of the preceding claims, wherein the spacer is a glass spacer.

11. The device of any of the preceding claims, wherein metallized walls of the spacer are of Au, Pt, Pd, Nb, Al, or Cu.

12. A method of manufacturing devices for controlling trapped ions, the method comprises:
providing a first wafer comprising a semiconductor and/or dielectric material;
forming a pattern of first metal structures at a main side of the first wafer;
providing a second wafer comprising a semiconductor and/or dielectric material;
forming a pattern of second metal structures at a main side of the second wafer;
providing a spacer wafer comprising a dielectric material;
forming a pattern of electrical interconnects in the spacer wafer, wherein an electrical interconnect is configured to electrically connect first metal structures to second metal structures;
structuring the spacer wafer to form a structured spacer wafer including a pattern of spacer members, wherein at least some of the spacer members comprise an electrical interconnect;
bonding the structured spacer wafer to the first wafer and/or to the second wafer by waferbonding, thereby forming bonds between the electrical interconnect and the first wafer and/or the second wafer; and
singulating the devices for controlling trapped ions from the bonded-together first wafer and spacer wafer or second wafer and spacer wafer.

13. The method of claim 12, wherein waferbonding is carried out by glass bonding or eutectic bonding or anodic bonding or thermocompression bonding or adhesive bonding or solid liquid interdiffusion bonding.

14. The method of claim 12 or 13, further comprising:
metallizing side walls of spacer members on wafer-level.

15. The method of any of claims 12 to 14, further comprising:
forming horizontal optical ducts or optical waveguides in spacer members on wafer-level.
